# EUROPÄISCHE PATENTSCHRIFT

(11) **EP 3 336 976 B1**
(45) Veröffentlichungstag und Bekanntmachung des Hinweises auf die Patenterteilung: **01.04.2026**
(21) Anmeldenummer: 16204680.9
(22) Anmeldetag: 16.12.2016
(51) Int. Cl.: H01R 43/05, H01R 43/28

(54) **KABELBEARBEITUNGSEINRICHTUNG**
CABLE PROCESSING DEVICE
DISPOSITIF DE TRAITEMENT DE CÂBLE

(43) Veröffentlichungstag der Anmeldung: 20.06.2018
(73) Patentinhaber: KOMAX HOLDING AG, 6036 Dierikon (CH)
(72) Erfinder: STAUBLI, Dominik, 6048 Horw (CH); MATTER, André, 6062 Wilen (CH)
(74) Vertreter: Inventio AG

(56) Entgegenhaltungen:
- EP-A1- 1 079 479
- EP-A1- 1 341 269
- EP-A1- 1 403 983
- EP-A1- 1 548 902
- EP-A1- 1 983 621
- WO-A1-2016/181766
- WO-A1-89/00348
- WO-A1-97/17751
- JP-A- H05 226 056
- US-B1- 6 357 575

## Beschreibung

Die Erfindung betrifft eine Kabelbearbeitungseinrichtung gemäss dem Oberbegriff von Anspruch 1. Derartige Kabelbearbeitungseinrichtungen werden für die Konfektionierung von Kabeln verwendet. Bei der Konfektionierung von Kabeln werden die Kabelenden von abgelängten und abisolierten Kabeln beispielsweise gecrimpt, mit Tüllen versehen und/oder mit Steckergehäusen bestückt.

Eine gattungsmässig vergleichbare Kabelbearbeitungseinrichtung ist zum Beispiel aus der EP 1 447 888 A1 bekannt geworden. Die Kabelbearbeitungseinrichtung EP 1 447 888 A1 verfügt über einen als Bandantrieb ausgebildeten Kabelvorschub zum Bewegen des Kabels entlang einer Maschinenlängsachse. Die Abisoliereinheit zum Ablängen und Abisolieren der Kabelenden ist auf der Maschinenlängsachse angeordnet. Weiter weist die Kabelbearbeitungseinrichtung als Arbeitsstationen zwei Crimpstationen und zwei Tüllenstationen auf. Da sich die Crimpstationen und Tüllenstationen neben der Maschinenlängsachse befinden, muss das Kabel mittels Kabelgreifern versehenen Schwenkarmen von Schwenkeinheiten zu den jeweiligen Arbeitsstationen geführt werden, weshalb diese Art von Kabelbearbeitungseinrichtungen dem Fachmann auch unter der Bezeichnung "Schwenkmaschinen" bekannt und geläufig ist. Auf folgende Schwenkmaschinen wird weiterhin hingewiesen: Die US 6,357,575 betrifft eine Schwenkmaschine mit Doppelgreifer. Die EP 1 403 983 A1 ist auf eine einarmige Schwenkmaschine gerichtet, mit deren Schwenkarm sowohl das vorauseilende als auch das nacheilende Kabelende Bearbeitungsstationen zugeführt werden können.

Die EP 1 079 479 A1 betrifft eine Kabelablagevorrichtung.

Die WO 97/17751 A1 zeigt eine Abisoliereinrichtung mit zwei fest nebeneinander angeordneten und seitwärts verschiebbaren Messerpaaren. Die Messer werden gemeinsam aktiviert oder bewegt. Die WO 2016/181766 A1 zeigt ebenfalls eine derartige Abisoliereinrichtung.

In der WO 89/00348 A1 ist ein Verfahren zur Herstellung von Kabelbäumen mittels eines Industrieroboters gezeigt.

Die EP 1983621 A1 zeigt eine Kabelbearbeitungseinrichtung gemäß dem Oberbegriff von Anspruch 1 mit Konfektionierstationen zur Konfektionierung eines Kabels, umfassend einen Maschinenständer, der zumindest einen Schwenkarm mit einer Kabelzuführung trägt und der es gestattet, das Kabel aufeinanderfolgend zumindest zwei Konfektionierstationen zuzuführen, die dem Maschinenständer seitlich benachbart zugeordnet und zu einer Maschinengruppe zusammengefasst sind, die die vollständige Abarbeitung des jeweiligen Auftrags gestattet. Beiderseits neben dem Maschinenständer sind Maschinengruppen vorgesehen, die durch Gelenke beweglich mit dem Maschinenständer verbunden und jeweils alternativ in eine Arbeits- und eine Rüstposition verschwenkbar sind.

In der JP H05226056 A ist eine Speichereinrichtung zum Speichern von Bearbeitungsmodulen zum Crimpen gezeigt.

Die EP 1341269 A1 zeigt eine Crimpeinrichtung mit zwei Crimpstationen. Je Crimpstation ist ein an einem Sockel angeordneter Werkzeugtisch mit drei Werkzeugstationen und eine Crimppresse vorgesehen. Eine Drehscheibe 54 trägt dabei die Werkzeugstationen.

Es ist eine Aufgabe der vorliegenden Erfindung, eine weiter verbesserte Kabelbearbeitungseinrichtung zu schaffen. Die Kabelbearbeitungseinrichtung soll es ermöglichen, dass verschiedenartige Kabel auf derselben Einrichtung einfach und effizient produziert werden können.

Erfindungsgemäss wird diese Aufgabe mit einer Kabelbearbeitungseinrichtung mit den Merkmalen des Anspruchs 1 gelöst. Die Kabelbearbeitungseinrichtung dient insbesondere zur Konfektionierung von Kabeln und umfasst wenigstens eine Arbeitsstation zum Bearbeiten von vorzugsweise abisolierten Kabelenden der Kabel. Arbeitsstationen können beispielsweise Crimpstationen mit Crimppressen und/oder Tüllenstationen mit Tüllenbestückungsmodulen sein. Als Bearbeitungsmodule für die Arbeitsstationen kommen jedoch auch andere als die vorerwähnten Bearbeitungsmodule in Frage, wie etwa Hülsenbestückungsmodule zum Bestücken von abisolierten Litzen mit Aderendhülsen, Verdrillmodule zum Verdrillen des Kabels, Verzinnmodule zum Verzinnen von abisolierten Kabelenden oder Schweissmodule zum Verschweissen der abisolierten Kabelenden.

Sofern das Kabel beidseitig abisoliert wird und beide Kabelenden konfektioniert werden sollen, ist es vorteilhaft, wenn die Kabelbearbeitungseinrichtung zwei Schwenkeinheiten aufweist, wobei eine der Schwenkeinheiten zur Handhabung des voreilenden Kabelendes und die andere Schwenkeinheit zur Handhabung des nacheilenden Kabelendes vorgesehen ist.

Erfindungsgemäss ist wenigstens eine der Arbeitsstationen als Wechselstation umfassend zwei Bearbeitungsmodule zum wahlweisen Bearbeiten des Kabelendes des Kabels in einem der Bearbeitungsmodule ausgestaltet. Dabei weist die als Wechselstation ausgestaltete Arbeitsstation einen Verstellmechanismus auf, mit dem die der Wechselstation zugeordneten Bearbeitungsmodule zwischen einer Arbeitsstellung und einer Wartestellung verstellbar sind. In der Arbeitsstellung befindet sich das Bearbeitungsmodul in einer Stellung, in der das Kabelende in diesem Bearbeitungsmodul bearbeitet werden kann. In der Wartestellung befindet sich das Bearbeitungsmodul in einer Stellung, in der das Bearbeitungsmodul soweit vom Kabelende entfernt ist, dass temporär keine Bearbeitung stattfinden kann. Die Wartestellung entspricht ersichtlicherweise einer Art Parkstellung; in der Arbeitsstellung ist das Bearbeitungsmodul betriebsbereit und dieses Bearbeitungsmodul kann so an einem laufenden Konfektionierprozess teilnehmen. Dank der Wechselstation wird der Anwendungsbereich der Kabelbearbeitungseinrichtung erweitert. Auf derselben Einrichtung können verschiedenartige Kabel einfach und effizient produziert werden. Lange Umrüstzeiten wie bei konventionellen Kabelbearbeitungseinrichtungen gibt es keine mehr.

Wenn die als Wechselstation ausgestaltete Arbeitsstation nur zwei Bearbeitungsmodule aufweist, dann befindet sich, wenn eines der Bearbeitungsmodule in der Arbeitsstellung ist, das andere Bearbeitungsmodul in der Wartestellung. Wenn mehr als zwei Bearbeitungsmodule je Wechselstation vorgesehen sind, dann ist die Kabelbearbeitungseinrichtung derart ausgeführt, dass, wenn ein Bearbeitungsmodul in der Arbeitsstellung ist, alle anderen Bearbeitungsmodule der Wechselstation in der Wartestellung sind.

Die zwei Bearbeitungsmodule einer Wechselstation sind auf einem gemeinsamen Träger angeordnet, wobei der Träger zum Schaffen des vorerwähnten Verstellmechanismus beweglich gegenüber einem Maschinengestell gelagert ist.

Das Maschinengestell ist vorzugsweise ortsfest ausgestaltet und stehend auf einem Boden eines Fabrikationsbetriebs angeordnet oder anordbar. Auf dem Maschinengestell können die vorgängig erwähnte, als Wechselstation ausgestaltete Arbeitsstation sowie gegebenenfalls die übrigen oder weiteren Arbeitsstationen der Kabelbearbeitungseinrichtung angeordnet sein.

Der Träger ist schwenkbar um eine vorzugsweise vertikale Drehachse auf dem Maschinengestell befestigt, wodurch ein vorteilhafter Verstellmechanismus geschaffen wird. Lediglich durch Verschwenken können die Bearbeitungsmodule zwischen der Arbeitsstellung und der Wartestellung (und umgekehrt) verstellt werden. Dies kann manuell oder unter Verwendung von Antriebsmitteln motorisch erfolgen.

Besonders bevorzugt sind die zwei Bearbeitungsmodule derart einander gegenüberliegend auf dem Träger angeordnet, dass die Bearbeitungsmodule der Wechselstation durch eine Drehbewegung um 180° wechselbar sind. Durch die 180°-Drehung wird eines der Bearbeitungsmodule von der Arbeitsstellung in die Wartestellung gebracht, während gleichzeitig das andere Bearbeitungsmodul von der Wartestellung in die Arbeitsstellung gebracht wird.

Für eine vorteilhafte Handhabung und zum einfachen Verschwenken kann der Träger einen Hebelgriff zum Verschwenken des Trägers zum Wechseln der Bearbeitungsmodule einer Wechselstation aufweisen. Anstatt den Träger manuell zu verschwenken, wäre es aber auch denkbar, einen beispielsweise auf einem Elektromotor basierenden Antrieb zum Verschwenken des Trägers vorzusehen. Für einen automatischen oder wenigstens halbautomatischen Betrieb könnte der Antrieb mit einer Steuereinheit verbunden sein.

Der Träger kann plattenförmig ausgestaltet sein. Beispielsweise kann der Träger kostengünstig aus einer Stahlplatte gefertigt werden. Der so als Drehplatte ausgestaltete Träger lässt sich auch einfach verbauen. Ein solcher Träger ist besonders vielseitig einsetzbar.

Die jeweiligen Bearbeitungsmodule einer Wechselstation sind auf separaten Plattformen montiert. Vorzugsweise sind diese Plattformen plattenförmig ausgestaltet und werden in diesem Fall nachfolgend auch als "Montageplatten" bezeichnet. Mit Hilfe der Plattformen und insbesondere der Montageplatten ist es besonders einfach möglich, auf der Kabelbearbeitungseinrichtung die gewünschten Bearbeitungsmodule zu platzieren.

Die Plattform ist über eine Linearführung verschiebbar auf dem Träger gelagert. Die Plattform und damit das auf er Plattform montierte Bearbeitungsmodul lässt sich so zwischen einer Aktivstellung und einer Wechselstellung verschieben. Wenn die Plattform in der Wechselstellung sich befindet, wird ein Wechseln der Bearbeitungsmodule der Wechselstation beispielsweise durch Verschwenken des Trägers ermöglicht. Wenn die Plattform (und das auf der Plattform montierte Bearbeitungsmodul) sich in der Aktivstellung befindet, kann dieses Bearbeitungsmodul direkt am Bearbeitungsprozess zum Konfektionieren von Kabeln mitwirken.

Besonders bevorzugt sind die Linearführungen zum Verschieben der Plattformen für die Bearbeitungsmodule einer Wechselstation parallel verlaufend angeordnet.

Jede Plattform kann einen Zuggriff zum Verschieben der Plattformen mit den jeweiligen Bearbeitungsmodulen aufweisen. Der Zuggriff kann beispielsweise ein Kugelgriff sein, der ein einfaches manuelles Verschieben der Plattformen erlaubt. Alternativ zur manuellen Ausführung könnte auch ein Antrieb vorgesehen sein, mit dem nach entsprechender Aktivierung die jeweilige Plattform sich verschieben lässt.

Die Wechselstation könnte eine Sperreinrichtung aufweisen, mit der ein Verschwenken oder allenfalls eine andere Bewegung des Trägers verunmöglichst ist, wenn wenigstens eine Plattform eines Bearbeitungsmoduls in der Arbeitsstellung sich in der Aktivstellung befindet. Auf diese Weise kann ein sicherer Betrieb der Kabelbearbeitungseinrichtung sichergestellt werden.

Zum Bilden der Sperreinrichtung kann im Träger eine Nut vorgesehen sein, in der ein Eingriffsglied, beispielsweise in Form einer Rolle, beim Verschieben der Plattform in die Aktivstellung einfahrbar ist. Alternativ kann in der Plattform eine Nut vorgesehen sein, in der ein dem Träger zugeordnetes Eingriffsglied beim Verschieben der Plattform in die Aktivstellung einfahrbar ist.

Vorteilhaft kann es weiter sein, wenn Sicherungsmittel zum lagemässigen Sichern der Plattform in einer Aktivstellung vorgesehen sind. Ein unabsichtliches Verschieben der jeweiligen Plattform aus der Aktivstellung kann so auf einfache Art und Weise verhindert werden.

Die Sicherungsmittel können eine Klemmeinheit mit einem Klemmstück aufweisen, das zum lagemässigen Sichern der Plattform in der Aktivstellung klemmend beaufschlägt. Die Sicherungsmittel könnten alternativ auch Sicherungsbolzen umfassen. Auch Mittel zum Erstellen einer Rastverbindung zum Sichern der Aktivstellung wären denkbar.

Zum Erhöhen der Personensicherheit ist es vorteilhaft, wenn die Kabelbearbeitungseinrichtung eine Schutzhaube zum Absichern des Arbeitsbereichs eines sich in einer Arbeitsstellung befindenden Arbeitsmoduls aufweist. Die Schutzhaube kann dabei derart ausgeführt sein, dass das oder die sich nicht in der Arbeitsstellung befindenden Arbeitsmodule der Wechselstation ausserhalb der Schutzhaube angeordnet sind. Dank dieser Anordnung ist gewährleistet, dass während des Betriebs die wartenden Bearbeitungsmodule vorbereitet werden können oder dass ohne Betriebsunterbruch neue Bearbeitungsmodule eingebaut werden können.

Die Schutzhaube kann zum Erlauben eines Wechsels von einem Bearbeitungsmodul zu einem anderen Bearbeitungsmodul der Wechselstation zwischen einer Schliessstellung und einer Offenstellung bewegbar sein. Besonders vorteilhaft ist die Schutzhaube in vertikaler Richtung zwischen der Schliessstellung und Offenstellung verschiebbar ausgeführt.

Je nach Anforderung kann die Wechselstation gleichartige Typen oder unterschiedliche Typen von Bearbeitungsmodulen aufweisen. Beispielsweise könnte die Wechselstation zwei Tüllenstationen oder zwei Crimpstationen aufweisen. Die Wechselstation könnte beispielhaft aber auch aus einer Crimpstation und einer Tüllenstation zusammengesetzt sein.

Die Bearbeitungsmodule einer Wechselstation sind aus einer Gruppe bestehend aus Crimppresse zur Herstellung einer Crimpverbindung, Tüllenmodul zum Bestücken des abisolierten Kabelendes mit einer Tülle, Hülsenbestückungsmodul zum Bestücken des abisolierten Kabelendes mit einer Aderendhülse, Verzinnmodul zum Verzinnen des abisolierten Kabelendes und Schweissmodul zum Verschweissen des abisolierten Kabelendes beispielsweise mit Ultraschallschweiss- oder Widerstandsschweissverfahren ausgewählt. Ein Hülsenbestückungsmodul würde es beispielsweise erlauben, die Produktion schnell von gecrimpem Kontakten mit Tülle zu Aderendhülsen umzustellen

Weitere Vorteile und Einzelmerkmale ergeben sich aus der nachfolgenden Beschreibung eines Ausführungsbeispiels und aus den Zeichnungen. Es zeigen:
- Fig. 1: eine als Schwenkmaschine ausgeführte Kabelbearbeitungseinrichtung mit mehreren Arbeitsstationen gemäss dem Stand der Technik,
- Fig. 2: eine als Wechselstation ausgestaltete Arbeitsstation für eine erfindungsgemässe Kabelbearbeitungseinrichtung in einer perspektivischen Darstellung,
- Fig. 3: die Arbeitsstation aus Fig. 2, jedoch mit geöffneter Schutzhaube,
- Fig. 4: die Arbeitsstation gemäss Fig. 3, wobei ein zuvor in einer Aktivstellung befindliches Bearbeitungsmodul in eine Wechselstellung gebracht worden ist,
- Fig. 5: die Arbeitsstation mit geöffneter Schutzhaube nach fertig ausgeführtem Wechsel der Bearbeitungsmodule der Wechselstation,
- Fig. 6: eine perspektivische Darstellung einer Wechselstation (ohne Bearbeitungsmodule) mit einem schwenkbaren Träger und darauf verschieblich gelagerten Plattformen, auf denen Bearbeitungsmodule montierbar sind,
- Fig. 7: die Wechselstation aus Fig. 6 in einer Draufsicht, mit Plattformen für die Bearbeitungsmodule jeweils in einer Wechselstellung,
- Fig. 8: eine Seitenansicht einer Wechselstation mit einem Teilschnitt,
- Fig. 9: eine Schnittdarstellung einer geöffneten Klemmeinheit zum Sichern einer Plattform in einer Aktivstellung, und
- Fig. 10: die geschlossene Klemmeinheit.

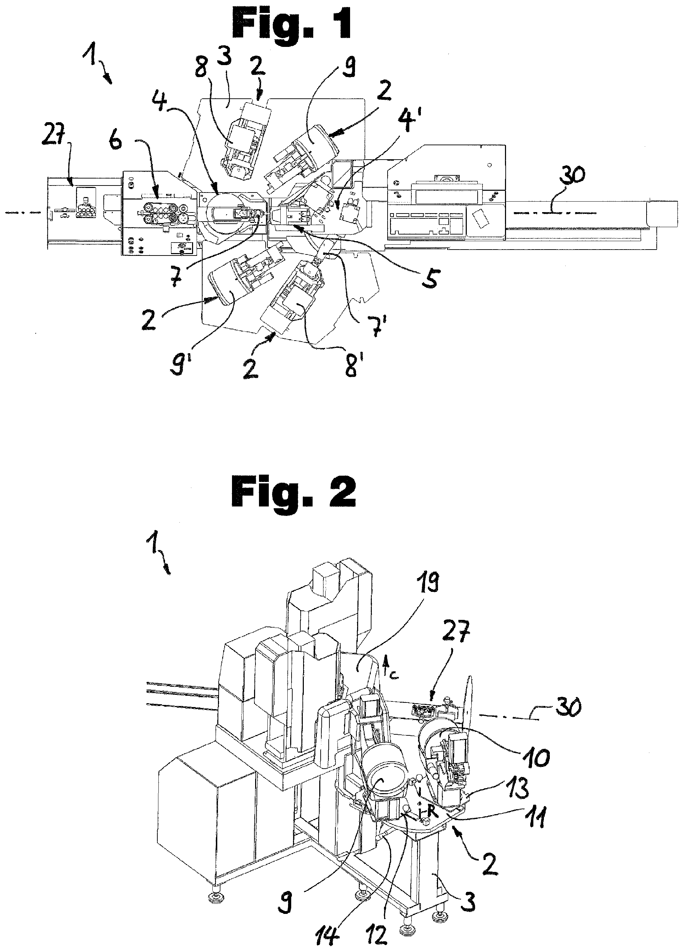

Fig. 1 zeigt eine insgesamt mit 1 bezeichnete Kabelbearbeitungseinrichtung zum Konfektionieren von (nicht dargestellten) Kabeln. Bei der vorliegend beispielhaft erläuterten Konfektionierung werden die Kabelenden zunächst abgelängt und abisoliert, danach gecrimpt und mit Tüllen versehen.

Die Kabelbearbeitungseinrichtung 1 umfasst eine als Bandförderer ausgestaltete Kabelfördereinrichtung 6, welche das Kabel entlang einer Maschinenlängsachse 30 zu den Schwenkeinheiten 4, 4' bringt. Mit 5 ist eine Abisolierstation bezeichnet, mit der das Kabel abgelängt und die beiden Kabelenden abisoliert werden. Die Abisolierstation 5 liegt ersichtlicherweise auf der Maschinenlängsachse 30. Die weiteren, mit 2 bezeichneten Arbeitsstationen liegen in der Draufsicht neben der Maschinenlängsachse 30. Vor der Kabelfördereinrichtung 6 ist eine Richteinheit 27 angeordnet, die ebenfalls auf der Maschinenlängsachse 30 liegt.

Die Kabelbearbeitungseinrichtung 1 ist als Schwenkmaschine ausgeführt und weist zwei Schwenkeinheiten 4 und 4' auf. Die um vertikale Achsen drehbare Schwenkeinheiten 4, 4' verfügen jeweils über einen Kabelgreifer 7, 7' zum Halten des Kabels. Mit den Kabelgreifern 7, 7' der Schwenkeinheiten 4, 4' können die jeweiligen Kabelenden den Arbeitsstationen 2 zugeführt werden.

In der Ausführungsvariante gemäss Figur 1 weist die Kabelbearbeitungseinrichtung 1 vier Arbeitsstationen 2 auf. Je zwei Arbeitsstationen sind jeweils zum Bearbeiten eines vorauseilenden Kabelendes und jeweils zum Bearbeiten eines nacheilenden Kabelendes vorgesehen. Die Arbeitsstationen sind als Tüllenstationen und Crimpstationen ausgestaltet und weisen Crimppressen 8, 8' und Tüllenmodule 9, 9' auf. Die mit 8 bezeichnete Crimppresse 8 und das mit 9 bezeichnete Tüllenmodul dienen dabei zum Bearbeiten der vorauseilenden Kabelenden und wirken mit der Schwenkeinheit 4 mit dem Kabelgreifer 7 zusammen. Die beiden auf der anderen Seite liegenden Arbeitsstationen 2 dienen zur Konfektionierung des nacheilenden Kabelendes; diese Arbeitsstationen 2 sind die mit 8' bezeichnete Crimppresse und das mit 9' bezeichnete Tüllenmodul.

Die Kabelbearbeitungseinrichtung 1 gemäss dem Beispiel von Fig. 1 eignet sich besonders gut für die Produktion von gleichartig konfektionierten Kabeln. Wenn neue oder andere konfektionierte Kabel produziert werden sollen, beispielsweise, wenn eine andere Tüllenart verarbeitet werden soll, müssen die entsprechenden Arbeitsstationen 2 umgerüstet und neu eingerichtet werden. Zum Umrüsten und Einrichten der Tüllenmodule 9, 9' muss die Produktion gestoppt werden, damit die Tüllenmodule umgerüstet und neu eingerichtet werden können, wodurch vergleichsweise lange Stillstandszeiten resultieren. Die nachfolgend im Detail erläuterte und in Fig. 2 gezeigte neuartige Arbeitsstation 2 ermöglicht ein schnelles Umstellen von einer Tüllenart auf eine andere Tüllenart.

Die Tüllenstation 2 der Kabelbearbeitungseinrichtung 1 gemäss Fig. 2 ist als Wechselstation ausgeführt und weist zwei Tüllenmodule 9 und 10 zum wahlweisen Bestücken eines Kabelendes mit Tüllen in einer der Tüllenmodule 9, 10 auf. Eine solche als Wechselstation ausgeführte Arbeitsstation kann nach entsprechender Anpassung Bestandteil einer Kabelbearbeitungseinrichtung 1 in der Art von Fig. 1 sein. Es ist auch denkbar, dass bestehende konventionelle Kabelbearbeitungseinrichtungen 1 mit solchen Wechselstationen nachgerüstet werden.

Anstatt der in Fig. 2 gezeigten Tüllenmodule 9, 10 könnten selbstverständlich auch andere Bearbeitungsmodule für die als Wechselstation ausgestaltete Arbeitsstation 2 eingesetzt werden. Bearbeitungsmodule für die Wechselstation 2 können zum Beispiel Crimppressen, Hülsenbestückungsmodule, Verdrillmodule, Verzinnmodule und/oder Schweissmodule sein.

In Fig. 2 befindet sich ein mit 9 bezeichnetes, erstes Tüllenmodul in einer Arbeitsstellung. In dieser Stellung können Tüllen aus diesem ersten Tüllenmodul 9 an Kabelenden aufgesetzt werden. Das zweite, mit 10 bezeichnete Tüllenmodul befindet sich in einer Wartestellung. Dieses zweite Tüllenmodul 10 kann im Vergleich zum ersten Tüllenmodul 9 mit anderen Tüllen beladen sein.

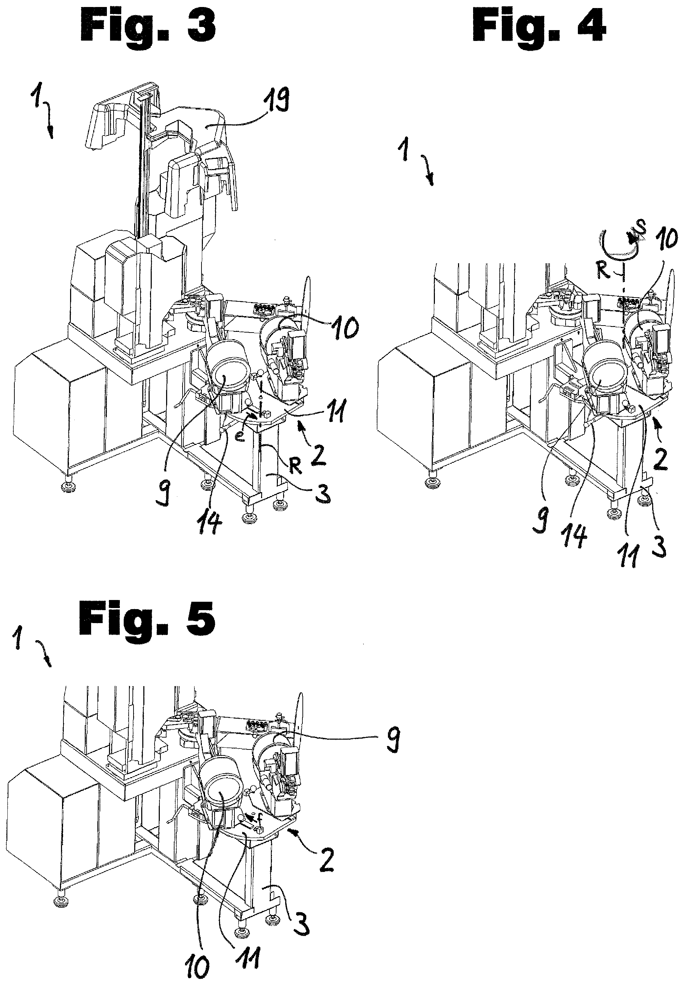

Sobald ein Umstellen auf eine andere Tülle erforderlich ist, wird das Tüllenmodul 9 aus der Arbeitsstellung in eine Wartestellung bewegt, während gleichzeitig das zweite Tüllenmodul 10 von der Wartestellung in die Arbeitsstellung bewegt wird (vgl. Fig. 5). Für den Wechsel der Bearbeitungsmodule 9 und 10 der Wechselstation 2 ist ein Verstellmechanismus vorgesehen. Dieser Verstellmechanismus umfasst einen Träger 11, auf dem die beiden Tüllenmodule 9, 10 angeordnet sind. Der Träger 11 ist schwenkbar um die mit R bezeichnete vertikale Drehachse schwenkbar auf dem Maschinengestell 3 befestigt. Die zwei Tüllenmodule 9, 10 sind derart einander gegenüberliegend auf dem Träger 11 angeordnet, dass die Tüllenmodule 9, 10 durch Verschwenken um 180° zwischen der Arbeitsstellung und Wartestellung hin und her bewegt werden können. Die jeweiligen Bearbeitungsmodule 9, 10 der Wechselstation sind auf separaten Plattformen 12, 13 montiert, die zwischen einer Aktivstellung und einer Wechselstellung hin und her bewegt werden können.

Ein Wechsel der Tüllenmodule 9, 10 kann wie folgt ablaufen: Der Betrieb der Kabelbearbeitungseinrichtung 1 wird vor Beginn des Wechselvorgangs gestoppt. Nun kann eine Schutzhaube 19, die den Arbeitsbereich der Tüllenstation 9 abdeckt, geöffnet werden. Die Öffnungsbewegung für die Schutzhaube 19 ist mit einem Pfeil c angedeutet. In Fig. 3 ist die Wechselstation 2 mit geöffneter Schutzhaube 19 dargestellt.

Danach wird das Tüllenmodul 9 durch Verschieben in e-Richtung in die Wechselstellung gebracht. Das so verschobene Tüllenmodul 9 ist in Fig. 4 gezeigt. Nun kann durch Verschwenken um 180° die Tüllenstation 9 von der Arbeitsstellung in die Wartestellung gebracht werden. Die Schwenkbewegung ist mit einem Pfeil s angedeutet. Nachdem das so in die Arbeitsstellung verschwenkte Tüllenmodul 10 zum Erstellen einer Aktivstellung in Richtung des Pfeils f zur Schwenkeinheit verschoben (Fig. 5) und die Schutzhaube 19 wieder abgesenkt wurde, ist die Kabelbearbeitungseinrichtung 1 wieder betriebsbereit. Nun können Tüllen vom Tüllenmodul 10 verarbeitet werden.

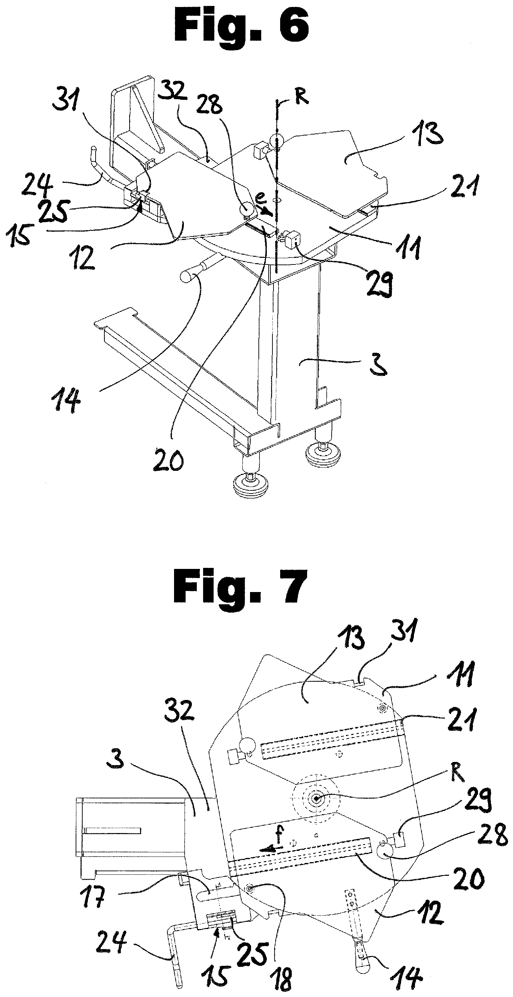

Konstruktive Details zur Ausgestaltung der Wechselstation 2 sind in den Fig. 6 bis 8 gezeigt. Zum besseren Verständnis des Aufbaus und der Wirkungsweise sind die jeweiligen Betriebsmodule (9, 10) in diesen Figuren nicht dargestellt. Der ersichtlicherweise plattenförmige Träger 11 ist schwenkbar auf dem Maschinengestell 3 gelagert. Für ein einfaches manuelles Verschwenken ist seitlich am Träger 11 ein Hebel mit einem Führungsgriff 14 angeordnet.

Für die verschiebliche Lagerung der Plattformen 12, 13 dienen Linearführungen 20, 21, die durch schienenförmige Profile auf der Trägeroberseite gebildet werden. Die zweite Plattform 13 ist im Hinblick auf den Aufbau und Funktionalität gleich wie die erste Plattform 12 ausgestaltet. Die Plattform 12 für das Bearbeitungsmodul in Arbeitsstellung befindet sich in Fig. 6 in der Aktivstellung. Zum lagemässigen Sichern der Aktivstellung der Plattform 12 ist eine Klemmeinheit 15 vorgesehen, die die Plattform 12 sicher in dieser Position festhält. Zum Freigeben der Plattform 12 ist die Klemmeinheit 15 mit einem Hebel 24 verbunden, der nach unten verschwenkt werden kann. Wenn die Plattform 12 von der Klemmeinheit freigegeben ist, kann die Plattform 12 in e-Richtung zum Erstellen der Wechselstellung verschoben werden. Zum Begrenzen des Verschiebewegs ist am Ende der Linearführung 20 ein Anschlag 29 vorgesehen.

In der Draufsicht gemäss Fig. 7 befindet sich die Plattform 12 in einer zurückgezogenen Wartestellung. Zum Verschieben der Plattformen 12, 13 dienen Kugelgriffe 28, die eine einhändige Handhabung zum Verschieben der jeweiligen Plattform 12, 13 erlauben. Der Träger 11 umfasst eine Nut 17, in der eine an einer dem Träger zugewandten Unterseite der Plattform 12 befestigte Rolle angebracht ist. Die Rolle 18 bildet ein Eingriffsglied, welches beim Erstellen der Aktivstellung durch Verschieben in f-Richtung in die Nut 17 einführbar ist. In der in Fig. 7 gezeigten Wartestellung der Plattform 12 ist die Rolle 18 unbeaufschlagt, wodurch ein Verschwenken des Trägers 11 zum Wechseln der Bearbeitungsmodule möglich ist.

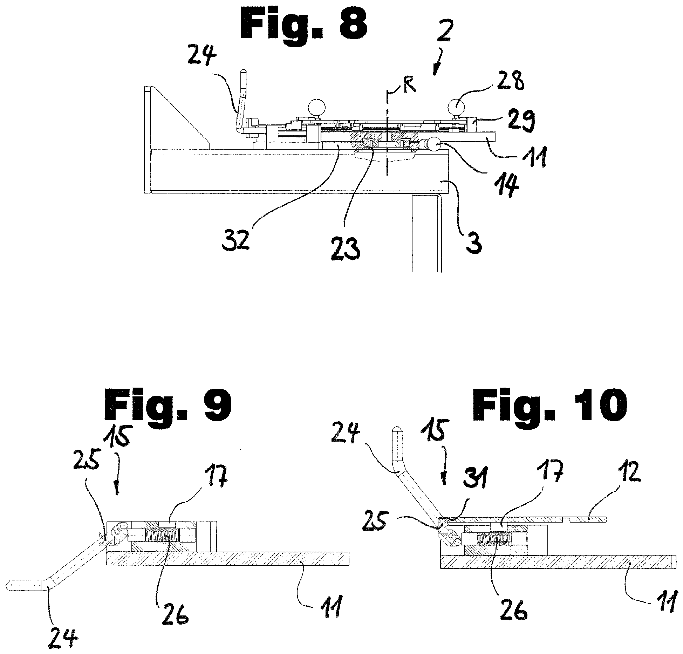

Der verschwenkbare Träger 11 liegt auf einer Auflageplatte 32 auf, die am Maschinengestell 3 befestigt ist. Aus der Schnittdarstellung im mittigen Teil von Fig. 8 ist weiter erkennbar, dass die Wechselstation 2 für die schwenkbare Lagerung des Trägers 11 ein Wälzlager 23 aufweist.

Die Figuren 9 und 10 zeigen Einzelheiten der Klemmeinheit 15 zum lagemässigen Sichern der Plattform 12 (oder 13) in der Aktivstellung. Die Klemmeinheit 15 weist ein Klemmstück 25 mit einem im Querschnitt dreieckigen Nase auf, der nach dem Hochschwenken des Hebels 24 von der geöffneten Position (Fig. 9) in die geschlossene Position (Fig. 10) gebracht werden kann. In der geschlossenen Position gemäss Fig. 10 greift die Nase des Klemmstücks 25 in eine Anphasung 31 (siehe auch Fig. 7), die am Seitenrand der Plattform 12 angeordnet ist, wodurch die Plattform 12 gesichert ist und ein unbeabsichtigtes Verschieben verunmöglicht ist. Die Schraubendruckfeder 26 bewirkt eine Vorspannkraft zum zuverlässigen Halten des Klemmstücks 25 in der geschlossenen Position.

Neben der Anphasung 31 kann ein Näherungssensor platziert sein, welcher anspricht, wenn die Klemmeinheit 15 geschlossen ist. Damit kann die Steuerung erkennen, welches Bearbeitungsmodul sich in der Aktivstellung befindet und ob es dort durch die Klemmeinheit 15 verriegelt ist.

Aus Fig. 10 ist entnehmbar, dass die Plattform 12 für die Montage des (nicht dargestellten) Bearbeitungsmoduls plattenförmig ausgestaltet ist. Deshalb werden die Plattformen 12, 13 auch als "Montageplatten" bezeichnet. Auf dem Träger 11 sind zwei baugleiche Montageplatten angebracht, auf denen die benötigten Bearbeitungsmodule befestigt werden, wobei die Montageplatten 12, 13 auf dem Träger 11 mittels den vorgängig beschriebenen Linearführungen verschiebbar sind. Diese Linearbewegung ist notwendig, um die Schwenkbewegung ohne Kollisionen ausführen zu können. Es sind allerdings Ausführungsvarianten mit fest mit dem Träger verbundenen Plattformen denkbar, weil die Linearbewegung bei Maschinen mit weniger engen Platzverhältnissen weggelassen werden kann.

## Patentansprüche

1. Kabelbearbeitungseinrichtung (1) mit wenigstens einer Arbeitsstation (2) zum Bearbeiten von Kabelenden von Kabeln und mit einer Schwenkeinheit (4, 4') mit einem Kabelgreifer (7, 7') zum Halten des Kabels und zum Zuführen der Kabelenden zu der wenigstens einen Arbeitsstation (2), wobei
wenigstens eine der Arbeitsstationen (2) als Wechselstation umfassend zwei Bearbeitungsmodule (9, 10) zum wahlweisen Bearbeiten des Kabelendes des Kabels in einem der Bearbeitungsmodule (9, 10) ausgestaltet ist, wobei die Bearbeitungsmodule (9, 10) der Wechselstation aus einer Gruppe bestehend aus Crimppresse (8), Tüllenmodul (9, 10), Hülsenbestückungsmodul, Verzinnmodul und Schweissmodul ausgewählt sind und wobei die als Wechselstation ausgestaltete Arbeitsstation (2) einen Verstellmechanismus aufweist, mit dem die der Wechselstation zugeordneten Bearbeitungsmodule (9, 10) zwischen einer Arbeitsstellung und einer Wartestellung verstellbar sind, wobei in der Arbeitsstellung sich das Bearbeitungsmodul (9, 10) in einer Stellung befindet, in der das Kabelende in diesem Bearbeitungsmodul bearbeitet werden kann und wobei in der Wartestellung sich das Bearbeitungsmodul (9, 10) in einer Stellung befindet, in der das Bearbeitungsmodul soweit vom Kabelende entfernt ist, dass temporär keine Bearbeitung stattfinden kann, wobei
die zwei Bearbeitungsmodule (9, 10) einer Wechselstation auf einem Träger (11) angeordnet sind, wobei der Träger (11) beweglich gegenüber einem Maschinengestell (3) gelagert ist, wobei der Träger (11) schwenkbar um eine vorzugsweise vertikale Drehachse (R) auf dem Maschinengestell (3) befestigt ist und **dadurch gekennzeichnet, dass** die jeweiligen Bearbeitungsmodule (9, 10) einer Wechselstation auf separaten Plattformen (12, 13) montiert sind, wobei die Plattform (12, 13) über eine Linearführung (20, 21) verschiebbar auf dem Träger (11) gelagert ist.

2. Kabelbearbeitungseinrichtung (1) nach Anspruch 1, **dadurch gekennzeichnet, dass** der Träger (11) einen Hebelgriff (14) zum Verschwenken des Trägers (11) zum Wechseln der Bearbeitungsmodule (9, 10) einer Wechselstation aufweist.

3. Kabelbearbeitungseinrichtung (1) nach Anspruch 1 oder 2, **dadurch gekennzeichnet, dass** Sicherungsmittel (15) zum Sichern der Plattform (12, 13) in einer Aktivstellung vorgesehen sind.

4. Kabelbearbeitungseinrichtung (1) nach Anspruch 3, **dadurch gekennzeichnet, dass** die Wechselstation eine Sperreinrichtung aufweist, mit deren Hilfe ein Verschwenken des Trägers (11) verunmöglicht ist, wenn wenigstens eine Plattform (12, 13) eines Bearbeitungsmoduls in der Arbeitsstellung sich in der Aktivstellung befindet.

5. Kabelbearbeitungseinrichtung (1) nach Anspruch 4, **dadurch gekennzeichnet, dass** zum Bilden der Sperreinrichtung im Träger (11) eine Nut (17) vorgesehen ist, in der ein Eingriffsglied (18) beispielsweise in Form einer Rolle beim Verschieben der Plattform in die Aktivstellung einfahrbar ist.

6. Kabelbearbeitungseinrichtung (1) nach einem der Ansprüche 1 bis 5, **dadurch gekennzeichnet, dass** eine Schutzhaube (19) zum Absichern des Arbeitsbereichs eines sich in einer Arbeitsstellung befindenden Bearbeitungsmoduls (9, 10) vorgesehen ist, wobei die Schutzhaube (19) derart ausgeführt ist, dass das oder die sich nicht in der Arbeitsstellung befindenden Bearbeitungsmodule (9, 10) der Wechselstation ausserhalb der Schutzhaube (19) angeordnet sind.

7. Kabelbearbeitungseinrichtung (1) nach Anspruch 6, **dadurch gekennzeichnet, dass** die Schutzhaube (19) zum Erlauben eines Wechsels von einem Bearbeitungsmodul (9, 10) zu einem anderen Bearbeitungsmodul (9, 10) der Wechselstation zwischen einer Schliessstellung und einer Offenstellung bewegbar ist.

8. Kabelbearbeitungseinrichtung (1) nach einem der Ansprüche 1 bis 7, **dadurch gekennzeichnet, dass** die Wechselstation gleichartige Typen oder unterschiedliche Typen von Bearbeitungsmodulen (9, 10) aufweist.

## Claims

1. Cable processing device (1) comprising at least one workstation (2) for processing cable ends of cables and comprising a pivot unit (4, 4') having a cable gripper (7, 7') for holding the cable and for feeding the cable ends to the at least one workstation (2), wherein at least one of the workstations (2) is designed as a changing station comprising two processing modules (9, 10) for selectively processing the cable end of the cable in one of the processing modules (9, 10), wherein the processing modules (9, 10) of the changing station are selected from a group consisting of a crimping press (8), a grommet module (9, 10), a sleeve insertion module, a tinning module and a welding module and wherein the workstation (2) designed as a changing station has a movement mechanism by means of which the processing modules (9, 10) assigned to the changing station can be moved between a working position and a waiting position, wherein, in the working position, the processing module (9, 10) is in a position in which the cable end can be processed in this processing module and wherein, in the waiting position, the processing module (9, 10) is in a position in which the processing module is so far from the cable end that, temporarily, no processing can take place, wherein the two processing modules (9, 10) of a changing station are arranged on a carrier (11), wherein the carrier (11) is movably mounted relative to a machine frame (3), wherein the carrier (11) is fastened to the machine frame (3) so as to be pivotable about a preferably vertical axis of rotation (R) and **characterized in that** the respective processing modules (9, 10) of a changing station are mounted on separate platforms (12, 13), wherein the platform (12, 13) is movably mounted on the carrier (11) by means of a linear guide (20, 21).

2. Cable processing device (1) according to claim 1, **characterized in that** the carrier (11) has a lever handle (14) for pivoting the carrier (11) for changing the processing modules (9, 10) of a changing station.

3. Cable processing device (1) according to claim 1 or 2, **characterized in that** securing means (15) are provided for securing the platform (12, 13) in an active position.

4. Cable processing device (1) according to claim 3, **characterized in that** the changing station has a locking device with which pivoting of the carrier (11) is rendered impossible if at least one platform (12, 13) of a processing module in the working position is in the active position.

5. Cable processing device (1) according to claim 4, **characterized in that** a groove (17) is provided in the carrier (11) to form the locking device, in which groove an engagement element (18), for example in the form of a roller, can be moved into the active position when the platform is moved.

6. Cable processing device (1) according to any of claims 1 to 5, **characterized in that** a protective hood (19) is provided for securing the working region of a processing module (9, 10) that is in a working position, wherein the protective hood (19) is designed in such a way that the processing module(s) (9, 10) of the changing station that are not in the working position are arranged outside of the protective hood (19).

7. Cable processing device (1) according to claim 6, **characterized in that** the protective hood (19) can be moved between a closed position and an open position to permit changing from one processing module (9, 10) to another processing module (9, 10) of the changing station.

8. Cable processing device (1) according to any of claims 1 to 7, **characterized in that** the changing station has similar types or different types of processing modules (9, 10).

## Revendications

1. Dispositif de traitement de câbles (1) comportant au moins un poste de travail (2) pour le traitement d'extrémités de câbles et comportant une unité de pivotement (4, 4') comportant une pince pour câble (7, 7') pour le maintien du câble et pour l'amenée des extrémités de câble à l'au moins un poste de travail (2), dans lequel au moins l'un des postes de travail (2) est conçu comme un poste de remplacement comprenant deux modules de traitement (9, 10) pour le traitement au choix de l'extrémité du câble dans l'un des modules de traitement (9, 10), dans lequel les modules de traitement (9, 10) du poste de remplacement sont choisis dans un groupe constitué d'une presse à sertir (8), d'un module passe-câbles (9, 10), d'un module d'équipement de douilles, d'un module d'étamage et d'un module de soudage, et dans lequel le poste de travail (2) conçu comme poste de remplacement présente un mécanisme de déplacement avec lequel les modules de traitement (9, 10) associés au poste de remplacement peuvent être déplacés entre une position de travail et une position d'attente, dans lequel, dans la position de travail, le module de traitement (9, 10) se trouve dans une position dans laquelle l'extrémité de câble peut être traitée dans ledit module de traitement et dans lequel, dans la position d'attente, le module de traitement (9, 10) se trouve dans une position dans laquelle le module de traitement est suffisamment éloigné de l'extrémité de câble pour qu'aucun traitement ne puisse avoir lieu temporairement, dans lequel les deux modules de traitement (9, 10) d'un poste de remplacement sont disposés sur un support (11), dans lequel le support (11) est monté mobile par rapport à un bâti de machine (3), dans lequel le support (11) est fixé au bâti de machine (3) de manière à pouvoir pivoter autour d'un axe de rotation (R) de préférence vertical et **caractérisé en ce que** les modules de traitement (9, 10) respectifs d'un poste de remplacement sont montés sur des plateformes (12, 13) séparées, dans lequel la plateforme (12, 13) est montée de manière à pouvoir coulisser sur le support (11) par l'intermédiaire d'un guide linéaire (20, 21).

2. Dispositif de traitement de câbles (1) selon la revendication 1,
**caractérisé en ce que** le support (11) présente une poignée formant levier (14) permettant de faire pivoter le support (11) pour le remplacement des modules de traitement (9, 10) d'un poste de remplacement.

3. Dispositif de traitement de câbles (1) selon la revendication 1 ou 2,
**caractérisé en ce que** des moyens de sécurité (15) sont prévus pour le blocage de la plateforme (12, 13) dans une position active.

4. Dispositif de traitement de câbles (1) selon la revendication 3,
**caractérisé en ce que** le poste de remplacement présente un dispositif de blocage à l'aide duquel un pivotement du support (11) est rendu impossible lorsqu'au moins une plateforme (12, 13) d'un module de traitement en position de travail se trouve en position active.

5. Dispositif de traitement de câbles (1) selon la revendication 4,
**caractérisé en ce que,** pour la formation du dispositif de blocage, une rainure (17) est prévue dans le support (11) dans laquelle un élément de mise en prise (18), par exemple sous forme de rouleau, peut être introduit lors du coulissement de la plateforme dans la position active.

6. Dispositif de traitement de câbles (1) selon l'une des revendications 1 à 5, **caractérisé en ce qu'**un capot de protection (19) est prévu pour sécuriser la zone de travail d'un module de traitement (9, 10) se trouvant dans une position de travail, dans lequel le capot de protection (19) est réalisé de telle sorte que le ou les modules de traitement (9, 10) du poste de remplacement qui ne se trouvent pas dans la position de travail sont disposés à l'extérieur du capot de protection (19).

7. Dispositif de traitement de câbles (1) selon la revendication 6,
**caractérisé en ce que** le capot de protection (19) est mobile entre une position de fermeture et une position d'ouverture pour permettre un remplacement d'un module de traitement (9, 10) par un autre module de traitement (9, 10) du poste de remplacement.

8. Dispositif de traitement de câbles (1) selon l'une des revendications 1 à 7, **caractérisé en ce que** le poste de remplacement présente des types similaires ou des types différents de modules de traitement (9, 10).
